(19) Europäisches Patentamt
European Patent Office
Office européen des brevets

(11) EP 3 135 712 A1

(12) # EUROPEAN PATENT APPLICATION

(43) Date of publication:
**01.03.2017 Bulletin 2017/09**

(21) Application number: **15182951.2**

(22) Date of filing: **28.08.2015**

(51) Int Cl.:
***C08J 3/22*** *(2006.01)* ***C08K 5/50*** *(2006.01)*
***C08L 9/06*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ARLANXEO Deutschland GmbH
41540 Dormagen (DE)**

(72) Inventor: **The designation of the inventor has not yet been filed**

(74) Representative: **Wichmann, Birgid et al
LANXESS Deutschland GmbH
LEX-IPR
Kennedyplatz 1
50569 Köln (DE)**

(54) **INCREASED EFFICIENCY OF DESULFURIZATION REAGENTS**

(57) Polymer masterbatch compositions, the production and use thereof, as well as vulcanizable rubber compounds comprising these masterbatch compositions, and their use for the production of moldings in the production of tires.

EP 3 135 712 A1

## Description

The present invention relates to rubber masterbatch compositions, the production and use thereof, rubber mixtures comprising these masterbatch compositions, and the use of such masterbatch compositions for the production of rubber vulcanizates, which serve, in particular, for the production of moldings in the production of tires.

Important properties desirable in tire treads include good adhesion on dry and wet surfaces, and high abrasion resistance. It is very difficult to improve the skid resistance of a tire without simultaneously worsening the rolling resistance and abrasion resistance. A low rolling resistance is important for low fuel consumption, and high abrasion resistance is a crucial factor for a long lifetime of the tire. Wet skid resistance and rolling resistance of a tire tread depend largely on the dynamic/mechanical properties of the rubbers used in the production. To lower the rolling resistance, rubbers with a high resilience at higher temperatures (60°C to 100°C) are used for the tire tread. On the other hand, for increasing the wet skid resistance, rubbers having a high damping factor at low temperatures (0°C to 23°C) or low resilience in the range of 0°C to 23°C are advantageous. In order to fulfill this complex profile of requirements, mixtures of various rubbers are used in the tread. Mixtures of one or more rubbers having a relatively high glass transition temperature, such as styrene-butadiene rubber, and one or more rubbers having a relatively low glass transition temperature, such as polybutadiene having a high 1,4-cis content or a styrene-butadiene rubber having a low styrene and low vinyl content or a polybutadiene prepared in solution and having a moderate 1,4-cis and low vinyl content, are used.

Furthermore, it is generally understood that the properties of silica and silicate fillers influence the properties of rubber and polymer compounds. In the production of tires, it is generally desirable to use silica or silicate-containing tire tread rubber compounds which show a satisfactory interaction between filler and rubber and decreased filler-filler interaction.

These interactions are characterized by the so-called Payne Effect. At small amplitudes, the dynamic storage modules in filler containing vulcanizates exhibits a distinct, non-linear behaviour which is due to the breakup of filler-filler networks. An enhanced rubber-filler interaction diminishes the Payne Effect as evidenced by a lowered difference of the storage modules at a low and high amplitude. It is further generally understood that the useful addition of silica and silicate fillers can be achieved only with the inclusion of a coupling agent in the rubber composition such as mercapto- or polysulfide alkoxy silanes. The addition of a coupling agent to the rubber composition can also, however, create processing problems such as scorching. EP 0 057 013 B1 and EP 1 010 723 A1 disclose the further addition of reagents such as triorganophosphines during rubber compounding processes.

Surprisingly, a way has been found to increase the performance of such rubber filler mixtures without increasing the amounts of additives or increasing the time for mixing the ingredients for compounding by using a masterbatch composition. This masterbatch composition exhibits unique behavior towards stressing conditions (e.g., heating and/or sheering forces), thus simplifying the dispersion of the filler and lowering the Payne Effect. In turn, increased performance is achieved.

The present invention relates to a masterbatch composition, comprising a diene homopolymer or a diene copolymer, a desulfurization reagent and optionally masterbatch polymer auxiliaries, wherein the masterbatch composition has a gel content as measured by gravimetric gel determination (defined infra) of less than 5%.

In a further embodiment, the masterbatch composition has a decrease of less than 5 % in Mooney viscosity ($M_L(1+4)_{100°C}$) when maintained at 25°C for five days and wherein the masterbatch composition has a decrease of more than 25% in Mooney viscosity ($M_L(1+4)_{100°C}$) when maintained at 70°C for seven days.

In another embodiment, the masterbatch composition when mixed with a rubber compound mixture, does not decrease the Mooney viscosity ($M_L(1+4)_{100°C}$) of the rubber compound mixture, said rubber compound comprising at least a rubber, a filler, a coupling agent, and at least one crosslinking system comprising at least one crosslinker and optionally one or more crosslinking accelerators. Wherein in an embodiment, the amounts of the components of the rubber compound are present as follows for 100 parts of rubber: 5 - 500 parts of a filler; 0.1 - 15 parts coupling agent, and 0.1 - 4 parts of a crosslinker and optionally crosslinking accelerators, respectively.

In another embodiment of the invention there is a vulcanizable rubber compound comprising the masterbatch composition above, a rubber, which is the same or different than a rubber of the masterbatch, a filler, a coupling agent, one or more rubber auxiliaries, and at least one crosslinking system comprising at least one crosslinker and optionally one or more crosslinking accelerators. Wherein, in an embodiment of the vulcanizable rubber compound, the sum of the masterbatch composition and the rubber is 100 phr, the filler is present in an amount of 5 - 500 phr, preferably 20 - 200 phr, the coupling agent is present in an amount of 0.1 - 15 parts per rubber, and the crosslinker and optionally one or more crosslinking accelerators are present in an amount from 0.1 - 4 parts per rubber, respectively.

In another embodiment of the invention there is a process for producing a vulcanizable rubber compound, comprising in a first step, mixing the masterbatch composition as described above with a rubber, a silica filler, a coupling agent, and at least one crosslinking system having at least one crosslinker, wherein said mixing step does not decrease the Mooney viscosity ($M_L(1+4)_{100°C}$) of the vulcanizable rubber compound. In one embody-ment, the mixing is performed by means of intermeshing, radial mixers, mills or extruders or combinations thereof.

In another embodiment of the invention there is a process for producing vulcanizates, comprising vulcanizing the vulcanizable compound above at a temperature in the range from 100°C to 200°C, preferably from 120°C to 190°C, as well as the vulcanizates obtained therefrom.
Desulfurization reagents of the masterbatch composition are trivalent phosphorous reagents, such as phosphines and/or phosphites, according to one of the general formula (I), (II), (III), (IV), (V), (VI) or (VII) below:

$P[(R)_a(OR)_b(NR_2)_c(SR)_d(SiR_3)_e]$ (I)

with $0 \leq a \leq 3$; $0 \leq b \leq 3$, $0 \leq c \leq 3$, $0 \leq d \leq 3$
with $a + b + c + d + e = 3$

$R_2P\text{-}PR_2$ (II)

$PR_2\text{-}R^1\text{-}[PR\text{-}R^1\text{-}]_nPR_2$ with n = 0 to 4 (III)

$P(\text{-}R^1\text{-}PR_2)_3$ (IV)

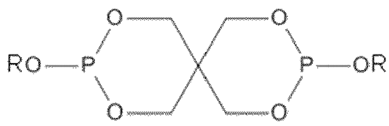

(V)

$(R)[\text{-}O[[\text{-}P(OR)_2]\ \text{-}OR^1]]_y\text{-}P(OR)$, where y is from 1 to 100 000 (VI)

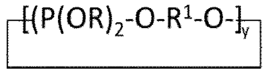, where y is from 1 to 100 000 (VII)

where

R, same or independently: H, linear and branched alkyl, aryl especially phenyl and alkylated phenyl, benzyl, polybutadienyl, polyisoprenyl, polyacryl, halide, and
$R^1$: same or independently: alkylidene, ethylene glycole, propylene glycole, di-substituted aryls.

Further exemplary phosphines and phosphites include tri(methyl)phosphine, tri(ethyl)-phosphine, tri(isopropyl)phosphine, tri(n-butyl)phosphine, tri(t-butyl)phosphine tri(heptyl)-phosphine, tricyclopentylphosphine, tri(cyclohexyl)phosphine, dicyclohexyl(ethyl)phosphine, tri(phenyl)phosphine, tri(o-tolyl)phosphine, tri(p-tolyl)phosphine, tri(m-tolyl)phosphine, diphenyl(p-tolyl)phosphine, diphenyl(o-tolyl)phosphine, diphenyl(m-tolyl)phosphine, phenyl-di(p-tolyl)phosphine, phenyl-di(o-tolyl)phosphine, phenyl-di(m-tolyl)phosphine, dicyclohexylphenylphosphine, cyclohexyldiphenylphosphine, tris(4-methoxyphenyl)phosphine, tris(trimethylsilyl)phosphine, tris(dimethylamino)phosphine, diphenyl(trimethylsilyl) phosphine, tris(2,4,6-trimethoxyphenyl)phosphine, tris(2,4,6-trimethylphenyl)phosphine, tris(3,5-dimethylphenyl)phosphine, tris(4-trifluoromethylphenyl)phosphine, dicyclohexyl(2,4,6-trimethylphenyl)phosphine, dicyclohexyl(4-isopropylphenyl)phosphine, dicyclohexyl(1-naphthoyl)phosphine, diphenyl-2-pyridylphosphine, tri(2-furyl)phosphine, phosphorus trichloride, dichloromethylphosphine, dichloroethylphosphine P,P-dichlorophenylphosphine, cyclohexyldichlorophosphine, n-butyldichlorophosphine, t-butyldichlorophosphine, dichloroisopropylphosphine, chlorodiphenylphosphine, chlorodiethylphosphine, chlorodicyclohexylphosphine, chlorodiisopropylphosphine, chlorodicyclopentylphosphine, di-t-butylchlorophosphine, di(1-adamantyl)chlorophosphine, bis(dimethylphosphino)methane, 1,2-bis(dimethylphosphino)ethane, 1,2-bis(dimethylphosphino)propane, 1,2-bis(dimethylphosphino)butane, bis(diethylphosphino)methane, 1,2-bis(diethylphosphino)ethane, 1,2-bis(diethylphosphino)propane, 1,2-bis(diethylphosphino)butane, bis(di-i-propylphosphino)methane, 1,2-bis(di-i-propylphosphino)ethane, 1,2-bis(di-i-propylphosphino)propane, 1,2-bis(di-i-propylphosphino)butane, bis(di-t-butylphosphino)methane, 1,2-bis(di-t-butylphosphino)ethane, di-t-butylphosphino)propane, 1,2-bis(di-t-butylphosphino)butane, bis-(dicyclohexylphosphino)methane, 1,2-bis(dicyclohexylphosphino)ethane, dicyclohexylphosphino)propane, 1,2-bis(dicyclohexylphosphino)butane, bis(diphenylphosphino)methane, 1,2-bis(diphenylphosphino)ethane, diphenylphosphino)propane, trimethyl phosphite, triethyl phosphite, triisopropyl phosphite, tributyl phosphite, triphenyl phosphite, tri-benzyl phosphite, dimethylethylphosphite, dimethylisopropylphosphite, dimethylbutylphosphite, dimethylphenylphosphite, dimethybenzylphosphite, diethylmethylphosphite, diethylisopropylphosphite, diethylbutylphosphite, diethylphenylphosphite, diethylbenzylphosphite, diisopropylmethylphosphite, diisopropylbutylphosphite, diisopropylphenylphosphite, diisopropylbenzylphosphite, dibutylethylphosphite, dibutylisopropylphosphite, dibutylbutylphosphite, dibutylphenylphosphite, dibutybenzylphosphite, tris(trimethylsilyl) phosphite, tris(2-chloroethyl) phosphite.

Preferred desulfurization reagents are tri(phenyl)phosphine, tri(n-butyl)phosphine and tri-(phenyl)phosphite. Particularly preferred is tri(phenyl)phosphine. The concentration of the desulfurization reagent of the masterbatch can be varied, for example, according to the amount of total desulfurization reagent desired to be introduced into a vulcanizable rubber compound. In one embodiment of the masterbatch, the desulfurization reagent is present in an amount of less than 60 phr, in another embodiment preferably from 0.01 to 5 phr is present, more preferably 0.05 to 3 phr, and particularly preferred 0.1 to 2.5 phr

Polymers, diene homopolymers or a diene copolymers of the masterbatch composition generally comprise rubbers known from literature and are listed here by way of example. They comprise, inter alia:

| | |
|---|---|
| BR | polybutadiene |
| S-SBR | styrene-butadiene copolymers prepared by solution polymerization, preferably having styrene contents of 1-60% by weight and particularly preferred 15-45% by weight, |
| ABR | butadiene/C1-C4-alkyl acrylate copolymers |
| IR | polyisoprene |
| E-SBR | styrene-butadiene copolymers prepared by emulsion polymerization preferably having styrene contents of 1-60% by weight and particularly preferred 20-50% by weight, |
| IIR | isobutylene-isoprene copolymers |
| BIIR, CIIR | halogenated (brominated, chlorinated) IIR |
| NBR | butadiene-acrylonitrile copolymers having acrylonitrile contents of 5-60%, preferably 10-40%, by weight |
| EPDM | ethylene-propylene-diene terpolymers |
| NR | natural rubber |
| HNBR | partially or fully hydrogenated NBR |

and mixtures of one or more of these rubbers.

In one embodiment, the rubbers can be functionalized with filler interacting moieties which can be in alpha and/or omega position and/or in-chain. Preferred rubbers are S-SBR and end-chain functionalized S-SBR. Various methods exist for in-chain and terminal end-chain functionalization of polymers. One method of end-chain functionalization of polymers uses doubly functionalized reagent, wherein polar functional groups react with the polymer and, using a second polar functional group in the molecule, interact with for example filler, as described by way of example in WO 01/34658 or US-A 6992147. Methods for introducing functional groups at the start of polymer chains by means of functional anionic polymerization initiators are described, for example, in EP 0 513 217 B1 and EP 0 675 140 B1 (initiators with a protected hydroxyl group), US 2008/0308204 A1 (thioether-containing initiators) and in US 5,792,820 and EP 0 590 490 B1 (alkali metal amides of secondary amines as polymerization initiators). More particularly, EP 0 594 107 B1 describes the *in situ* use of secondary amines as functional polymerization initiators, but does not describe the chain end functionalization of the polymers. In addition, numerous methods have been developed for introduction of functional groups at the end of polymer chains. For example, EP 0 180 141 A1 describes the use of 4,4'-bis(dimethylamino)benzophenone or N-methylcaprolactam as functionalization reagents. The use of ethylene oxide and N-vinylpyrrolidone is known from EP 0 864 606 A1. A number of further possible functionalization reagents are detailed in U.S: Pat. Nos. 4,906,706 and 4,417,029.

The masterbatch composition can be produced by standard means such as intermeshing or radial mixers, mills or extruders or combinations thereof with or without standard mixing aggregates. It has been shown to be preferential to use temperatures in the range of +/-30° C referred to the melting point of the corresponding desulfurization reagent when being a solid. It is further possible to add the desulfurization reagents to the monomer feedstock, to a polymer solution or dispersion, followed by standard workup procedures such as precipitation or coagulation, optionally in addition with intermeshing or radial mixers, mills or extruders or combinations thereof.

It is further possible to add masterbatch polymer auxiliaries to the diene homopolymer or a diene copolymer during the masterbatching procedure. Examples of such auxiliaries are accelerators, antioxidants, heat stabilizers, light stabilizers, antiozone agents, processing aids, plasticizers, tackifiers, blowing agents, dyes, pigments, waxes, extenders, organic acids, silanes, retarders, metal oxides, activators, coupling agents, such as silanes (described further below), and extender oils, examples of such oils include, DAE (Distillate Aromatic Extract) oil, TDAE (Treated Distillate Aromatic Extract) oil, MES (Mild Extraction Solvate) oil, RAE (Residual Aromatic Extract) oil, TRAE (Treated Residual Aromatic Extract) oil, and naphthenic and heavy naphthenic oils.

However, with respect to gel content, the masterbatch polymer auxiliaries are chosen so the masterbatch composition has a gel content of less than 5 % with respect to the diene homopolymer or a diene copolymer.

The gel content is measured by a gravimetric gel determination method. According to this gravimetric gel determination method the gel content of a masterbatch or a vulcanizable compound are determined as follows:

10g of the corresponding compound (+/- 0.1 mg) and 400 mL of toluene are added to a flask. The flask is closed and stored for 24 hours at 23°C, followed by 24 hours of shaking via mechanical shaker operating at 200 cycles per minute.

The resulting dispersion is ultra-centrifuged at 25000 rpm for 60 minutes.

The resulting supernatant solution is decanted and the residue dried to a constant weight in vacuum of less than 100 mbar at 60°C.

As used herein, for either a masterbatch or a vulcanizable rubber compound, gel content is defined according to the formula,

$$\text{gel content [\%]} = \frac{\text{m(residue)} - [\sum \text{m(insoluble components)}]}{\text{M(total)}} \times 100$$

Where for a masterbatch or vulcanizable rubber compound sample:

M(total) is the total mass of the masterbatch or vulcanizable compound sample,

m(residue) is the mass of all components of the masterbatch or vulcanizable compound sample not soluble in toluene,

m(insoluble components) is the mass of all components other than rubber which are not soluble in toluene. For example, insoluble components other than rubber, include carbon blacks, silicas, metal oxides or other toluene insoluble chemicals.

In another embodiment of the invention there is a vulcanizable rubber compound comprising the masterbatch composition above, an additional rubber, a filler, a coupling agent, one or more rubber auxiliaries, and at least one crosslinking system comprising at least one crosslinker and optionally one or more crosslinking accelerators. Such vulcanizable rubber compounds are, in turn, useful for the production of vulcanizates, especially for the production tire treads having particularly low rolling resistance coupled with high wet skid resistance and abrasion resistance, or layers thereof, or rubber moldings. When in such instances as the masterbatch composition of the invention is used in vulcanizable rubber compounds for tire production, it is possible, *inter alia,* to discern a marked decrease of the loss factors tan delta at 60° C in dynamic damping and amplitude sweep, and also an increase of the rebound at 23° C and 60° C, and also an increase of hardness and of the moduli in the tensile test. In addition, filler-rubber interactions are increased as shown by the lowered Payne Effect. An increasing loss factor at 0° C in temperature sweep further indicates an improved wet grip. The vulcanizable rubber compounds are also suitable for production of moldings, for example for the production of cable sheaths, hoses, drive belts, conveyor belts, roll covers, shoe soles, gasket rings and damping elements. The invention further provides the use of the masterbatch composition for the production of golf balls and technical rubber items, and also rubber-reinforced plastics, e.g. ABS plastics and HIPS plastics.

In one embodiment of the vulcanizable rubber compounds there is 10 to 500 parts by weight of filler, based on 100 parts by weight of the polymer of the masterbatch composition.

The vulcanizable rubber compounds can be produced by standard means such as intermeshing or radial mixers, mills or extruders or combinations thereof.

Rubber auxiliaries of the vulcanizable rubber compound are those which generally improve the processing properties of rubber compounds, or serve for the crosslinking of the rubber compounds, or improve the physical properties of the vulcanizates produced from the rubber compounds of the invention for the specific intended use of the vulcanizates, or improve the interaction between rubber and filler or serve to couple the rubber to the filler. Examples of such rubber auxiliaries are crosslinking agents, e.g. sulphur or sulphur-donor compounds, and also reaction accelerators, antioxidants, heat stabilizers, light stabilizers, antiozone agents, processing aids, plasticizers, tackifiers, blowing agents, dyes, pigments, waxes, extenders, organic acids, activators, coupling agents, such as silanes (described further below), retarders, metal oxides, and extender oils, e.g. DAE (Distillate Aromatic Extract) oil, TDAE (Treated Distillate Aromatic Extract) oil, MES (Mild Extraction Solvate) oil, RAE (Residual Aromatic Extract) oil, TRAE (Treated Residual Aromatic Extract) oil, and naphthenic and heavy naphthenic oils.

The above-mentioned silanes are preferably sulphur-containing silanes, aminosilanes, vinyl silanes, or a mixture

thereof. Suitable sulphur-containing silanes include those described in United States patent 4,704,414, in published European patent application EP 0670347 A1 and in published German patent application DE 4435311 A1, which references are all incorporated herein by reference.

Such preferred sulphur containing silanes comprise a sulfane moiety or comprise a mixture of compounds comprising a sulfane moiety. One suitable example is a mixture of bis[3-(triethoxysilyl)propyl]monosulfane, bis[3(triethoxysilyl)propyl]disulfane, bis[3-(triethoxysilyl)propyl]trisulfane and bis[3(triethoxysilyl)propyl]tetrasulfane, or higher sulfane homologues, available under the trademarks Si69™ (average sulfane 3.7), Silquest™ A-I 589 (from CK Witco) or Si-75™ (from Evonik) (average sulfane 2.35). Another suitable example is bis[2-(triethoxysilyl)ethyl]-tetrasulfane, available under the trade-mark Silquest™ RC-2. Other suitable silane compounds include those with mercapto or thio functionality provided in conjunction with bulky ether groups and a monoethoxy group for binding to the silica surface; a non-limiting example of such a compound is $[((CH_3(CH_2)_{12}\text{-}(OCH_2CH_2)_5O))_2(CH_3CH_2O)]Si\text{-}C_3H_6\text{-}SH$, which is commercially available under the trade name Silane VP Si 363™ (from Evonik). In one preferred embodiment, the sulphur containing silanes have a molar ratio of sulfur to silicium of less than 1.35 : 1, more preferably, less than 1.175 : 1.

Other suitable sulphur-containing silanes include compounds of formula

$$R^6R^7R^8SiR^9$$

in which at least one of $R^6$, $R^7$ and $R^8$, preferably two of $R^6$, $R^7$ and $R^8$ and most preferably three of $R^6$, $R^7$ and $R^8$, are hydroxyl or hydrolysable groups. The groups $R^6$, $R^7$ and $R^8$ are bound to the silicon atom. The group $R^6$ may be hydroxyl or $OC_pH_{2p+1}$ where p is from 1 to 10 and the carbon chain may be interrupted by oxygen atoms, to give groups, for example of formula $CH_3OCH_2O$-, $CH_3OCH_2OCH_2O$-, $CH_3(OCH_2)_4O$-, $CH_3OCH_2CH_2O$-, $C_2H_5OCH_2O$-, $C_2H_5OCH_2OCH_2O$-, or $C_2H_5OCH_2CH_2O$-. Alternatively, $R^8$ may be phenoxy. The group $R^7$ may be the same as $R^6$. $R^7$ may also be a $C_{1\text{-}10}$ alkyl group, or a $C_{2\text{-}10}$ mono-or diunsaturated alkenyl group. Further, $R^7$ may be the same as the group $R^9$ described below. $R^8$ may be the same as $R^6$, but it is preferred that $R^6$, $R^7$ and $R^8$ are not all hydroxyl. $R^8$ may also be $C_{1\text{-}10}$ alkyl, phenyl, $C_{2\text{-}10}$ mono- or diunsaturated alkenyl. Further, $R^8$ may be the same as the group $R^9$ described below. The group $R^9$ attached to the silicon atom is such that it may participate in a crosslinking reaction with unsaturated polymers by contributing to the formation of crosslinks or by otherwise participating in crosslinking. $R^9$ may have the following structure:

$$-(alk)_e(Ar)_fS_i(alk)_g(Ar)_hSiR^6R^7R^8$$

where $R^6$, $R^7$ and $R^8$ are the same as previously defined, alk is a divalent straight hydrocarbon group having between 1 and 6 carbon atoms or a branched hydrocarbon group having between 2 and 6 carbon atoms, Ar is either a phenylene $-C_6H_4-$,biphenylene-$C_6H_4$-$C_6H_4$- or -$C_6H_4$-$OC_6H_4$-group and e, f, g and h are either 0, 1 or 2 and i is an integer from 2 to 8 inclusive with the provisos that the sum of e and f is always 1 or greater than 1 and that the sum of g and h is also always 1 or greater than 1. Alternately, $R^9$ may be represented by the structures $(alk)_e(Ar)_fSH$ or $(alk)_e(Ar)_fSCN$ where e and f are as defined previously. Preferably, $R^6$, $R^7$ and $R^8$ are all either $OCH_3$, $OC_2H_5$ or $OC_3H_8$ groups and most preferably all are $OCH_3$ or $OC_2H_5$ groups. Non-limiting illustrative examples of these sulphur-containing silanes include the following: bis[3-triethoxysilyl)propyl]disulfane, bis[2-(trimethoxysilyl)ethyl]tetrasulfane, bis[2-(triethoxysilyl)ethyl]trisulfane, bis[3-(trimethoxysilyl)propyl]disulfane, 3-mercaptopropyltrimethoxysilane, 3-mercaptopropylmethyldiethoxysilane, and 3- mercaptoethyipropylethoxymethoxysilane.

Preferred aminosilanes are those of Formula $R^1R^2N\text{-}A\text{-}SiR^3R^4R^5$, defined in WO98/53004, which is incorporated herein by reference, and acid addition salts and quaternary ammonium salts of such aminosilanes. $R^1$, $R^2$ are selected from linear or branched alkyls or aryl groups, A is a linear or branched alkyl or aryl group (bridging group), $R^3$ is selected from linear or branched alkoxy or aryloxy groups and $R^4$ and $R^5$ are selected from linear or branched alkyls or aryl groups, or linear or branched alkoxy or aryloxy groups. Suitable aminosilanes include, but are not limited to: 3-aminopropyltriethoxysilane 3-aminopropyltrimethoxysilane 3-aminopropylmethyldiethoxysilane, 3-aminopropyldiisopropylethoxysilane, N-(6-aminohexyl)aminopropyltrimethoxysilane, 4-aminobutyltriethoxysilane, 4-aminobutyldimethylmethoxysilane, 3-aminopropyltris(methoxyethoxyethoxy)silane, 3-aminopropyldiisopropylethoxysilane, N-(6-aminohexyl)aminopropyltrimethoxysilane, 4-aminobutyltriethoxysilane, and (cyclohexylaminomethyl)-methyldiethoxysilane. Suitable alternative aminosilanes which have additional functionality (ie. diamine, triamine, or vinyl groups) include, but are not limited to: N-2-(vinylbenzylamino)-ethyl-3-aminopropyltrimethoxysilane, N-(2-aminoethyl)-3-aminopropyltrimethoxysilane, trimethoxysilylpropyldiethylenetriamine, N-2-(aminoethyl)-3-aminopropyltris(2-ethylhexoxy)-silane, triethoxysilylpropyldiethylenetriamine, N-(2-aminoethyl)-3-aminopropyltrimethoxysilane, N-2-(aminoethyl)-3-aminopropyltris(2-ethylhexoxy)silane. The aminosilanes described above can be used as the free base, or in the form of its acid addition or quaternary ammonium salt. Non-limiting examples of suitable salts of aminosilanes include: N-oleyl-N-[(3-triethoxysilyl)propyl]ammonium chloride, N-3-aminopropylmethyldiethoxy-silane hydrobromide, (aminoethylaminomethyl) phenyltrimethoxysilane hydrochloride, N-[(3-trimethoxysilyl)propyl]-N-methyl, N-N-diallylammonium chloride, N-tetradecyl-N,N-dimethyl-N-[(3-trimethoxysilyl) propyl]ammonium bromide, 3[2-N-benzylaminoethyl-amino-propyl]trimethoxysilane hydrochloride, N-octadecyl-N,N-dimethyl-N-[(3-tri-methoxysilyl)propyl]ammonium bromide, N-[(trimethoxysilyl)propyl]-N-tri(n-butyl)ammonium chloride, N-octadecyl-N-[3-triethoxysilyl)propyl]ammonium chloride, N-2-(vinylbenzylamino)-ethyl-3-aminopropyl-trimethoxysilane hydrochloride, N-2-(vinylbenzylamino)ethyl-3-aminopropyl-trimethoxysilane hydrochloride and N-oleyl-N-[(3-trimethoxysilyl)propyl]ammonium chloride.

The vulcanizable rubber compounds can be produced in a one-stage or in a multistage process, preference being given to 2 to 3 mixing stages. For example, sulphur and accelerator can be added in a separate mixing stage, for example on a roller, preferred temperatures being in the range from 30 to 90°C. In one embodiment there is a process for producing vulcanizates, comprising vulcanizing the vulcanizable rubber compounds, preferably in the course of a shaping process, preferably at a temperature in the range from 100°C to 200°C, more preferably from 120°C to 190°C and especially preferably from 130°C to 180°C.

Preference is given to adding sulphur and accelerator in the last mixing stage. Examples of equipment suitable for the production of the vulcanizable rubber compositions include rollers, kneaders, internal mixtures or mixing extruders.

Additional rubbers of the vulcanizable rubber compounds, which may be the same or different than a rubber of the masterbatch, are, for example, natural rubber and synthetic rubbers, including those already described above with respect to the masterbatch. If present, the amount thereof is preferably within the range from 0.5 to 95%, preferably 10 to 80%, by weight, based on the total amount of diene homopolymer or a diene copolymer of the matersbatch in the compound. The amount of the additional rubbers added is again guided by the respective end use of the inventive mixtures. For the production of car tires, particularly natural rubber, E-SBR and S-SBR having a glass transition temperature above -60°C, polybutadiene rubber which has a high cis content (> 90%) and has been prepared with catalysts based on Ni, Co, Ti or Nd, and polybutadiene rubber having a vinyl content of up to 80% and mixtures thereof are of interest.

Useful fillers for the vulcanizable rubber compounds include all known fillers used in the rubber industry. These include both active and inactive fillers. The following should be mentioned by way of example: finely divided silicas, produced, for example, by precipitation of solutions of silicates or flame hydrolysis of silicon halides having specific surface areas of 5-1000, preferably 20-400 $m^2/g$ (BET surface area) and having primary particle sizes of 10-400 nm. Suitable silica fillers are commercially available under the trademarks HiSil 210, HiSil 233 and HiSil 243 available from PPG Industries Inc. Also suitable are Vulkasil S and Vulkasil N, commercially available from Lanxess, as well as highly dispersible silica types such as, for example but not limited to, Zeosil 1165 MP (Rhodia) and Ultrasil 7005 (Degussa) and the like. The silicas may optionally also be present as mixed oxides with other metal oxides, such as oxides of Al, Mg, Ca, Ba, Zn, Zr, Ti; synthetic silicates, such as aluminium silicate, alkaline earth metal silicates such as magnesium silicate or calcium silicate, having BET surface areas of 20-400 $m^2/g$ and primary particle diameters of 10-400 nm; natural silicates, such as kaolin and other naturally occurring silica; glass fibres and glass fibre products (mats, strands) or glass microspheres; metal oxides, such as zinc oxide, calcium oxide, magnesium oxide, aluminium oxide; metal carbonates, such as magnesium carbonate, calcium carbonate, zinc carbonate; metal hydroxides, for example aluminium hydroxide, magnesium hydroxide; metal sulphates, such as calcium sulphate, barium sulphate; carbon blacks: The carbon blacks to be used here are carbon blacks produced by the lamp black, channel black, furnace black, gas black, thermal black, acetylene black or light arc process and have BET surface areas of 9 - 200 $m^2/g$, for example SAF, ISAF-LS, ISAF-HM, ISAF-LM, ISAF-HS, CF, SCF, HAF-LS, HAF, HAF-HS, FF-HS, SPF, XCF, FEF-LS, FEF, FEF-HS, GPF-HS, GPF, APF, SRF-LS, SRF-LM, SRF-HS, SRF-HM and MT carbon blacks, or ASTM N110, N219, N220, N231, N234, N242, N294, N326, N327, N330, N332, N339, N347, N351, N356, N358, N375, N472, N539, N550, N568, N650, N660, N754, N762, N765, N774, N787 and N990 carbon blacks; and/or rubber gels, especially those based on BR, E-SBR and/or polychloroprene having particle sizes of 5 to 1000 nm.

The fillers used are preferably finely divided silicas. The fillers mentioned can be used alone or in a mixture.

In one preferred embodiment, the vulcanizable rubber compositions comprise, as fillers, a mixture of light-coloured fillers, such as finely divided silicas, and carbon blacks, the mixing ratio of light-coloured fillers to carbon blacks being 0.01:1 to 50:1, preferably 0.05:1 to 20:1. The fillers are used here in amounts in the range from 10 to 500 parts by weight based on 100 parts by weight of rubber. Preference is given to using 20 to 200 parts by weight.

Although the preferred embodiment of the present invention has been described herein, it is to be understood that the invention is not limited to that precise embodiment, and that various other changes and modifications may be affected therein by one skilled in the art without departing from the scope or spirit of the invention. The examples below serve to illustrate the invention, without any associated limiting effect.

EXAMPLES

The following properties were determined in accordance with the stated standards:

DIN 52523/52524 Mooney viscosity $M_L(1+4)_{100°C}$

DIN 53505: Shore A hardness

DIN 53512: rebound resilience at 60°C

DIN 53504: tensile test

DIN53513: dynamic damping via Eplexor equipment - Eplexor equipment (Eplexor 500 N) from Gabo-Testanlagen GmbH, Ahlden, Germany was used to determine dynamic properties (temperature dependency of storage modulus E' in the temperature range from -60°C to 0°C and also tan δ at 60°C). The values were determined in accordance with DIN53513 at 10 Hz on Ares strips in the temperature range from -100°C to +100°C at a heating rate of 1 K/min.

The method was used to obtain the following variables, the terminology here being in accordance with ASTM 5992-96: tan δ (60°C): loss factor (E"/E') at 60°C, tan δ (60°C) is a measure of hysteresis loss from the tire under operating conditions. As tan δ (60°C) decreases, the rolling resistance of the tire decreases.

DIN 53513-1990: Elastic properties - An MTS elastomer test system (MTS Flex Test) from MTS was used to determine the elastic properties. The measurements were carried out in accordance with DIN53513-1990 on cylindrical samples (2 samples each 20 x 6 mm) with a total 2 mm compression at a temperature of 60°C and a measurement frequency of 1 Hz in the range of amplitude sweep from 0.1 to 40%.The method was used to obtain the following variables, the terminology here being in accordance with ASTM 5992-96: G* (15%): dynamic modulus at 15% amplitude sweep; tan δ (max): maximum loss factor (G"/G') of entire measuring range at 60°C.

The gel content and bound rubber the masterbatch and the vulcanizable compounds, respectively, were determined by the gravimetric gel determination as described above.

Following substances were used in the compounds:

| Tradename | Producer |
|---|---|
| BUNA® CB 22 (Nd-Polybutadiene) | Lanxess Deutschland GmbH |
| BUNA® CB 25 (Nd-Polybutadiene) | Lanxess Deutschland GmbH |
| BUNA® Nd 24 EZ (Nd-Polybutadiene) | Lanxess Deutschland GmbH |
| BUNA® PBR4070 (end-functionalized SSBR containing 37.5 phr of TDAE oil) | Lanxess Deutschland GmbH |
| VSL4526-0 HM (non-functionalized SSBR, clear grade) | Lanxess Deutschland GmbH |
| Zeosil 1165MP (silica) | Solvay GmbH |
| VIVATEC® 500 (TDAE oil) | Hansen und Rosenthal KG |
| EDENOR® C 18 98-100 (stearic acid) | Caldic Deutschland GmbH |
| VULKANOX® 4010 NA/LG (stabilizer) | Lanxess Deutschland GmbH |
| VULKANOX® 4020 LG (stabilizer) | Lanxess Deutschland GmbH |
| RHENOGRAN® ZNO-80 (ZnO) | Lanxess Deutschland GmbH |
| VULKANOX® HS/LG (stabilizer) | Lanxess Deutschland GmbH |
| RHENOGRAN® CBS-80 (accelerator) | Lanxess Deutschland GmbH |
| RHENOGRAN® IS 90-65 (sulfur) | Lanxess Deutschland GmbH |
| ANTILUX® 654 (ozone protection) | Lanxess Deutschland GmbH |
| SI 266 (silane) | Evonik Industries AG |
| Triphenylphosphine | Sigma Aldrich GmbH |

Examples:

<u>Preparation of a masterbatch containing solution-SBR and triphenylphosphine:</u>

A masterbatch was prepared by first milling a solution-SBR VSL4526-0 HM at 80° C using a nip of 4 mm thereby forming a rubber sheet, to which 2 phr of fine-powered phosphine was added and then further mixed until a homogeneous rubber sheet was obtained. The gel content of the masterbatch was determined to 0.33 %.

Examples of a decrease in masterbatch Mooney viscosity

Shown in Tables 1(a) and (b) are results of a comparison of the Mooney viscosities between an S-SBR and an S-SBR/TPP masterbatches (having 2 phr TPP) upon storage at various temperature conditions. The Mooney viscosity is measured via the conditions of ML(1+4)$_{100°C}$ and provided in the Table below in percentages standardized to "0" at day 0.

Table 1 (a) Increased temperature

| days | CE1 SSBR VSL4526-0HM | Ex1 SSBR VSL4526-0HM 2 phr TPP | days | CE2 SSBR VSL4526-0HM | Ex2 SSBR VSL4526-0HM 2 phr TPP | days | CE3 SSBR VSL4526-0HM | Ex3 SSBR VSL4526-0HM 2 phr TPP |
|---|---|---|---|---|---|---|---|---|
| | Mooney @ 23° C storage | | | Mooney @ 50° C storage | | | Mooney @ 70° C storage | |
| 0 | 0,0 | 0,0 | 0 | 0,0 | 0,0 | 0 | 0,0 | 0,0 |
| 5 | -0,8 | -0,4 | 7 | -0,9 | -30,4 | 5 | -2,8 | -45,2 |
| 11 | -0,2 | 0,2 | 17 | -2,8 | -43,0 | 11 | -2,5 | -59,8 |

Table 1 (b) Increased temperature and shear in a Haake Rheomix 600p mixer at 10 rpm.

| Rubber | TPP phr | Mixer Temp.°C | Mixer temp. After mixing time [°C] | Mixing time [min] | Change in Mooney viscosity [%] ** |
|---|---|---|---|---|---|
| CE4 BUNA® CB 22 | - | 110 | 120 | 11 | -1,9 |
| Ex4 BUNA® CB 22 | 0,2 | 110 | 120 | 11 | -11,2 |
| CE5 BUNA® CB 22 | - | 120 | 130 | 11 | -22,9 |
| Ex5 BUNA® CB 22 | 0,2 | 120 | 130 | 11 | -31,2 |
| CE6 BUNA® CB 22 | - | 130 | 140 | 12 | -20,6 |
| Ex6 BUNA® CB 22 | 0,2 | 130 | 140 | 12 | -43,4 |
| ** Change in Mooney viscosity is measured upon allowing a sample to cool for 6 hours at ambient temperatures after completion of the mixing. | | | | | |

The following rubber compound mixture recipes (Table 2) were used for the following comparative study. All quantities mentioned below are provided in phr (parts per hundred).

Table 2

| | | Reference 1 | Reference 2 | Example 1 | Reference 3 | Example 2 |
|---|---|---|---|---|---|---|
| BUNA® CB 25 | | 20 | 20 | 20 | - | - |
| BUNA® Nd 24 EZ | | - | - | - | 20 | 20 |
| ZEOSIL® 1165MP | | 90 | 90 | 90 | 90 | 90 |
| VIVATEC® 500 | | 2 | 2 | 2 | 36 | 36 |
| AFLUX® 37 | | 2 | 2 | 2 | 2 | 2 |
| EDENOR® C 18 98-100 | | 1,5 | 1,5 | 1,5 | 1 | 1 |

(continued)

| | Reference 1 | Reference 2 | Example 1 | Reference 3 | Example 2 |
|---|---|---|---|---|---|
| VULKANOX® 4010 NA/LG | 2 | 2 | 2 | - | - |
| VULKANOX® 4020 LG | - | - | - | 1 | 1 |
| VULKANOX® HS/LG | 1 | 1 | 1 | 1 | 1 |
| ANTILUX® 654 | 1 | 1 | 1 | 1 | 1 |
| SI 266 | 6,7 | 6,7 | 6,7 | 6,5 | |
| RHENOGRAN® CBS-80 | 2 | 2 | 2 | 1,6 | 1,6 |
| RHENOGRAN® IS 90-65 | 3,3 | 3,3 | 3,3 | 3,4 | 3,4 |
| RHENOGRAN® DPG-80 | 2 | 2 | 2 | 1,65 | 1,65 |
| RHENOGRAN® ZNO-80 | 5 | 5 | 5 | 3,8 | 3,8 |
| PBR4070 | 110 | 110 | - | - | - |
| PBR4070 Masterbatch (containing 1.8 phr of TPP) | - | - | 111,8 | - | - |
| SSBR VSL4526-0 HM | - | - | - | 80 | |
| SSBR VSL4526-0 HM Masterbatch (containing 1.8 phr of TPP) | - | - | - | - | 81,8 |
| Triphenyl phosphine (TPP) | - | 1,8 | - | 1,8 | - |

The compounds for references 1 to 3 were mixed as illustrated in the following mixing protocol. For references 2 and 3, the tri(phenyl)phosphine was added together with filler, silane, stearic acid and oil. Mixing was performed in a 1.5 L intermeshing mixer with a mixer speed of 40 rpm, an indenter pressure of 8 bar at a starting temperature of 70° C. The filling degree was 72 %.

| Step 1 | mixer | |
|---|---|---|
| | 0 sec | addition of polymers |
| | 30 sec | addition of 2/3 of filler, silane, stearic acid, oil and optionally 2/3 of TPP |
| | 90 sec | addition of 1/3 of filler, silane, stearic acid, oil addition of carbon black and optionally 1/3 of TPP |
| | 150 sec | addition of ZnO |
| | 210 sec | heating to silanization temperature (150° C) |
| | 390 sec | stop |
| Step 2 | milling | at 40° C, nip of 4 mm |
| | | Cut sheet threetimes left and right, continue with three endwise passes |
| Step 3 | storage | for 24 hours at 23° C |
| Step 4 | mixer | |
| | 0 sec | addition of rubber sheet and heating to 150° C |
| | 210 sec | stop |
| Step 5 | Milling | at 40° C, nip of 4 mm |
| | | addition of sulphur and accelerator, cut sheet threetimes left and right, continue with three endwise passes |

Examples 1 and 2 according to the invention, were mixed as illustrated in the following mixing protocol. Mixing was performed in a 1.5 L intermeshing mixer with a mixer speed of 40 rpm, an indenter pressure of 8 bar at a starting temperature of 70° C. The filling degree was 72 %.

| | | |
|---|---|---|
| Step 1 | mixer | |
| | 0 sec<br>30 sec<br><br>90 sec<br>150 sec<br>210 sec<br>390 sec | addition of polybutadiene and masterbatch SSBR<br>addition of 2/3 of filler, silane, stearic acid, oil and<br>addition of 1/3 of filler, silane, stearic acid, oil<br>addition of carbon black<br>addition of ZnO<br>heating to silanization temperature (150° C)<br>stop |
| Step 2 | milling | at 40° C, nip of 4 mm |
| | | Cut sheet threetimes left and right, continue with three endwise passes |
| Step 3 | storage | for 24 hours at 23° C |
| Step 4 | mixer | |
| | 0 sec<br>210 sec | addition of rubber sheet and heating to 150° C<br>stop |
| Step 5 | Milling | at 40° C, nip of 4 mm |
| | | addition of sulphur and accelerator, cut sheet threetimes left and right, continue with three endwise passes |

Per Table 3, the following are comparative results for the compounded materials and vulcanizates of the BR/SBR/silica mixtures of Table 2.

Table 3

| | | Reference 1 | Reference 2 | Example 1 | Reference 3 | Example 2 |
|---|---|---|---|---|---|---|
| ML Compound | MU | 76,6 | 87,21 | 88,21 | 47,3 | 47,2 |
| Tensile strain at 100 % stretch | | | | | | |
| 23° C | MPa | 2,2 | 2,4 | 3,3 | 1,7 | 2,2 |
| 60° C | MPa | 2 | 2,3 | 3 | 1,5 | 1,8 |
| Dynamic Damping 10 Hz | | | | | | |
| tan d (0°C) | | 0,392 | 0,54 | 0,6 | 0,498 | 0,529 |
| tan d (60 °C) | | 0,101 | 0,069 | 0,064 | 0,107 | 0,107 |
| MTS Amplitude Sweep 1 Hz, 60° C | | | | | | |
| tan d (max.) | | 0,154 | 0,118 | 0,098 | 0,152 | 0,145 |
| G'(0.5%) - G'(15%)* | [MPa] | 0,927 | 0,401 | 0,283 | 0,310 | 0,250 |
| Rebound | | | | | | |
| at 23° C | % | 27 | 31,5 | 32,33 | 30 | 32 |
| at 60° C | % | 55 | 63,5 | 68 | 55 | 57 |
| Abrasion DIN 53516 | $mm^3$ | 92 | 79 | 77 | 102 | 91 |
| Hardness | | | | | | |
| at 23° C | Shore A | 62,9 | 60,7 | 64,8 | 54,2 | 55,9 |
| at 60° C | Shore A | 60,0 | 60,0 | 62,0 | 60,0 | 60,0 |
| Gel content | % | 23,72 | 36,67 | 39,27 | - | - |
| * a small Payne Effect is described by a small difference of G' at small and large amplitude. | | | | | | |

Comparing reference 1 (without desulfurization reagent) and reference 2 (triphenylphosphine as desulfurization

reagent, added in step 1 of the mixing procedure), a significant improvement in rolling resistance parameters, such as an increase in rebound at 60° C, a decrease in tan d (60° C) from the dynamic damping experiment and a decrease in tan d max from the amplitude sweep experiment at 60° C is observed. An increase in tan d (0° C) in the dynamic damping experiment indicates an improved wet grip. In addition, abrasion is diminished. The difference G'(0.5%) - G'(15%) from the amplitude sweep measurement is reduced indicating improved rubber-filler interactions which is further confirmed by an increase of bound rubber. Concerning measurements which correlate with stiffness of the vulcanisates which is known to be important for handling of a tire having this tread compound, the addition of a desulfurization reagent to the mixing process shows no effect. This is expressed by only marginal changes in the tensile strain at 100 % stretch and constant hardness at 60° C or even a softening effect at 23° C.

In Example 1 using a solution-SBR/triphenylphosphine masterbatch the same amount of desulfurization reagent is used as in reference 2. All rolling resistance relevant parameters (rebound at 60° C, decrease in loss factor tan d at 60° C in dynamic damping experiments and tan d max in amplitude sweep measurement at 60° C show a distinct and considerable improvement. Further the tan d (0° C) indicates further improved wet grip. Payne Effect decreases by 30 % and bound rubber increases by another 2.6 % in comparison to the desulfurization reagent containing reference 2. It is further noteworthy that the Compound Mooney viscosity is not diminished despite using the thermal- and shear sensitive masterbatch.

In contrast to reference 2, example 1 exhibits substantial improvement in stiffness e.g. the tensile strength at 100 % stretch and 23° C increases by 37 % and 30 % at 60°C, respectively (referred to the desulfurization reagent containing reference 2). Hardness at 60° C increases by 2 Shore A in comparison to reference 1 and 2 and by 1.8 Shore A referred to reference 1 and 4.1 Shore A referred to reference 2, respectively. This evidences that the use of the inventive masterbatch of a desulfurization reagent in a rubber, as it is described here, improves he properties significantly although the overall recipe itself remains the same.

A comparison of reference 3 with example 2 further provides the evidence that this beneficial effect of a masterbatch of desulfurization reagents in SBR can be obtained with non-functionalized S-SBR as well. The indicative parameters described above suggest reduced rolling resistance, improved wet grip and increased stiffness. Again, this can be attributed to an improved rubber-filler and reduced filler-filler interaction as illustrated in a lower Payne Effect achieved by an intermediate Mooney drop of the masterbatch.

Per the above, it was surprisingly found that the masterbatch composition will have a stable Mooney viscosity at ambient conditions, a decreased Mooney viscosity upon application of a stressing condition, which allows improved dispersibility of the auxiliaries and which masterbatch composition when added to a rubber compound does not decrease the Mooney viscosity of such a compound. As such, it should be appreciated that the rubber masterbatch composition allows a more effective increase of rubber-filler interaction resulting in an unexpected increase in performance.

## Claims

**1.** A masterbatch composition, comprising:

a diene homopolymer or a diene copolymer and
a desulfurization reagent,
wherein the masterbatch composition has a gel content as measured by gravimetric gel determination of less than 5 %.

**2.** The masterbatch composition according to Claim 1,
wherein the masterbatch composition has a decrease of less than 5% in Mooney viscosity ($M_L(1+4)_{100°C}$) when maintained at 25°C for five days, and
wherein the masterbatch composition has a decrease of more than 25% in Mooney viscosity ($M_L(1+4)_{100°C}$) when maintained at 70°C for seven days.

**3.** The masterbatch composition according to claim 2,
wherein the masterbatch composition when mixed with a rubber compound mixture, does not decrease the Mooney viscosity ($M_L(1+4)_{100°C}$) of the rubber compound mixture, said rubber compound comprising at least a rubber, a filler, a coupling agent, and at least one crosslinking system comprising at least one crosslinker and optionally one or more crosslinking accelerators.

**4.** The masterbatch composition according to claim 1,
wherein the desulfurization reagent is present in an amount of from 0.01 to 5 phr, preferably 0.05 to 3 phr, and particularly preferred 0.1 to 2.5 phr

5. The masterbatch composition according to claim 1, wherein the desulfurization reagent is a trivalent phosphorous compound.

6. The masterbatch composition according to claim 1, further comprising:

   a coupling agent, wherein the coupling agent is a sulphur containing silane comprising a sulfane moiety and having a molar ratio of sulfur to silicium of less than 1.35 : 1, more preferably less than 1.175 : 1.

7. The masterbatch composition according to claim 1, wherein the diene homopolymer or the diene copolymer are obtained via copolymerization of conjugated diene monomers or conjugated diene monomers with vinylaromatic co-monomers.

8. The masterbatch composition according to claim 1, wherein the diene homopolymer or the diene copolymer are one or more of polyisoprene, natural rubber, polybutadiene, or polybutadiene-styrene.

9. The masterbatch composition according to claim 1, wherein the desulfurization reagent is a trivalent phosphorous reagent according to one of the general formula (I) - (VII):

$$P[(R)_a(OR)_b(NR_2)_c(SR)_d(SiR_3)_e] \quad (I)$$

with $0 \leq a \leq 3$; $0 \leq b \leq 3$, $0 \leq c \leq 3$, $0 \leq d \leq 3$
with $a + b + c + d + e = 3$

$$R_2P\text{-}PR_2 \quad (II)$$

$$PR_2\text{-}R^1\text{-}[PR\text{-}R^1\text{-}]_nPR_2 \text{ with } n = 0 \text{ to } 4 \quad (III)$$

$$P(\text{-}R^1\text{-}PR_2)_3 \quad (IV)$$

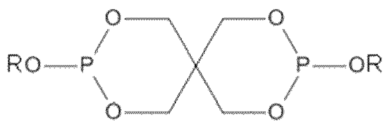

(V)

$$(R)[\text{-}O[[\text{-}P(OR)_2]\ \text{-}OR^1]]_y\text{-}P(OR), \text{ where y is from 1 to 100 000} \quad (VI)$$

$$\text{-}[(P(OR)_2\text{-}O\text{-}R^1\text{-}O\text{-}]_y \text{, where y is from 1 to 100 000} \quad (VII)$$

where

   R, same or independently: H, linear and branched alkyl, aryl especially phenyl and alkylated phenyl, benzyl, polybutadienyl, polyisoprenyl, polyacryl, halide, and
   $R^1$ same or independently: alkylidene, ethylene glycole, propylene glycole, di-substituted aryl.

10. A vulcanizable rubber compound, comprising:

   the masterbatch composition according to claim 1,
   a rubber,
   a filler,
   a coupling agent, and
   at least one crosslinking system comprising at least one crosslinker and optionally one or more crosslinking accelerators.

**11.** The vulcanizable rubber compound according to claim 10, further comprising:

one or more further rubber auxiliaries.

**12.** The vulcanizable rubber compound according to claim 10, wherein the filler comprises a mixture of silica filler and carbon black filler, the mixing ratio of silica filler to carbon black being 0.01:1 to 50:1.

**13.** The vulcanizable rubber compound according to claim 10, wherein the coupling agent is a sulphur containing silane comprising a sulfane moiety.

**14.** The vulcanizable rubber compound according to claim 10, wherein the coupling agent is one or more of bis[3-(triethoxysilyl)propyl]monosulfane, bis[3(triethoxysilyl)-propyl]disulfane, bis[3-(triethoxysilyl)propyl]trisulfane and bis[3(triethoxysilyl)propyl]-tetrasulfane.

**15.** A process for producing the vulcanizable rubber compound according to claim 10, comprising:

mixing together the masterbatch composition, a rubber, a silica filler, a coupling agent, and at least one crosslinking system having at least one crosslinker, wherein said mixing step does not decrease the Mooney viscosity ($M_L(1+4)_{100°C}$) of the vulcanizable rubber compound.

**16.** The process for producing a vulcanizable rubber compound according to claim 15, wherein the desulfurization reagent is a trivalent phosphorous compound.

**17.** A process for producing vulcanizates, comprising:

vulcanizing the vulcanizable compound according to claim 10.

**18.** The process according to claim 17, wherein said vulcanizing step is performed at a temperature in the range from 100°C to 200°C, preferably from 120°C to 190°C.

**19.** Vulcanizates obtained by the process according to claim 16.

**20.** The vulcanizates according to claim 19, wherein said vulcanizates are shaped in the form of shaped bodies, more preferably in the form of a drive belt, of roller coverings, of a seal, of a cap, of a stopper, of a hose, of floor covering, of sealing mats or sheets, profiles or membranes, tires, tire treads, or layers thereof.

Europäisches Patentamt
European Patent Office
Office européen des brevets

# EUROPEAN SEARCH REPORT

Application Number
EP 15 18 2951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 3 355 421 A (COOK WENDELL S) 28 November 1967 (1967-11-28)<br>* claim 1; examples *<br>----- | 1-9<br>10-20 | INV.<br>C08J3/22<br>C08K5/50<br>C08L9/06 |
| X<br>A | FR 1 400 876 A (UNION CARBIDE CORP) 28 May 1965 (1965-05-28)<br>* table pages 5-6 *<br>----- | 1-9<br>10-20 | |
| X<br>A | GB 1 271 983 A (ETHYL CORP [US]) 26 April 1972 (1972-04-26)<br>* table 6 *<br>----- | 1-9<br>10-20 | |
| X<br>A | FR 2 026 464 A1 (MONSANTO CHEMICALS) 18 September 1970 (1970-09-18)<br>* example 8 *<br>----- | 1-9<br>10-20 | |
| A | EP 1 321 488 A1 (GOODYEAR TIRE & RUBBER [US]) 25 June 2003 (2003-06-25)<br>* example A *<br>----- | 1-20 | |
| | | | TECHNICAL FIELDS SEARCHED (IPC) |
| | | | C08L<br>C08J<br>C08K |

The present search report has been drawn up for all claims

1

| Place of search | Date of completion of the search | Examiner |
|---|---|---|
| Munich | 4 February 2016 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 18 2951

This annex lists the patent family members relating to the patent documents cited in the above-mentioned European search report. The members are as contained in the European Patent Office EDP file on The European Patent Office is in no way liable for these particulars which are merely given for the purpose of information.

04-02-2016

| Patent document cited in search report | | Publication date | Patent family member(s) | | Publication date |
|---|---|---|---|---|---|
| US 3355421 | A | 28-11-1967 | NONE | | |
| FR 1400876 | A | 28-05-1965 | BE 650268 | A1 | 03-11-1964 |
| | | | FR 1400876 | A | 28-05-1965 |
| | | | GB 1078772 | A | 09-08-1967 |
| | | | NL 6408010 | A | 18-01-1965 |
| GB 1271983 | A | 26-04-1972 | CH 516597 | A | 15-12-1971 |
| | | | DE 1908306 | A1 | 18-09-1969 |
| | | | FR 2002528 | A1 | 17-10-1969 |
| | | | GB 1271983 | A | 26-04-1972 |
| | | | NL 6902587 | A | 26-08-1969 |
| FR 2026464 | A1 | 18-09-1970 | BE 743299 | A | 17-06-1970 |
| | | | DE 1962807 | A1 | 08-10-1970 |
| | | | ES 374602 | A1 | 01-03-1972 |
| | | | FR 2026464 | A1 | 18-09-1970 |
| | | | NL 6918520 | A | 22-06-1970 |
| EP 1321488 | A1 | 25-06-2003 | DE 60212052 | T2 | 23-11-2006 |
| | | | EP 1321488 | A1 | 25-06-2003 |
| | | | US 2003119946 | A1 | 26-06-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0057013 B1
- EP 1010723 A1
- WO 0134658 A
- US 6992147 A
- EP 0513217 B1
- EP 0675140 B1
- US 20080308204 A1
- US 5792820 A
- EP 0590490 B1
- EP 0594107 B1
- EP 0180141 A1
- EP 0864606 A1
- US 4906706 A
- US 4417029 A
- US 4704414 A
- EP 0670347 A1
- DE 4435311 A1
- WO 9853004 A